# EUROPEAN PATENT APPLICATION

(11) **EP 4 757 063 A1**
(43) Date of publication of application: **10.06.2026**
(21) Application number: 25217257.2
(22) Date of filing: 20.11.2025
(51) Int. Cl.: H01M 50/618

(54) **METHOD FOR MANUFACTURING A BATTERY**

(30) Priority: 05.12.2024 JP 2024212119
(71) Applicant: Prime Planet Energy & Solutions, Inc., Tokyo 103-0022 (JP)
(72) Inventor: IGUCHI, Hiroki, Tokyo, 103-0022 (JP)
(74) Representative: Kuhnen & Wacker Patent- und Rechtsanwaltsbüro PartG mbB

(57) **Abstract**

In an injecting step, a preset amount of an electrolytic solution is injected by multiple separate steps while first processing of injecting the electrolytic solution up to a position higher than a reference height set to be equal to or higher than an upper end of an electrode body at inside of the case in a state where the battery assembly is disposed with the injection port facing up, second processing of depressing the case by reducing a pressure in the case and maintaining a liquid surface level of the electrolytic solution injected in the first processing at a position equal to or higher than the reference height, and third processing of, after the pressure in the case is reduced to a preset pressure, releasing the inside of the case are repeated.

## Description

### BACKGROUND

The present disclosure relates to a method for manufacturing a battery.

JP 2022-90917 A discloses a method for manufacturing a battery including a battery case that includes an injection port, an electrode body housed in the battery case, and an electrolytic solution housed in the battery case. The electrode body includes an electrode opposed region where a positive electrode active material layer of a positive electrode plate and a negative electrode active material layer of a negative electrode plate are opposed to each other. The battery manufacturing method includes an injecting step of injecting the electrolytic solution into the battery case through the injection port. The injecting step includes a first injecting step and a second injecting step. In the first injecting step, a first injection amount V1 of an electrolytic solution is injected in a state where a pressure in the battery case is maintained at a first pressure P1 lower than an atmospheric pressure. The first injection amount V1 is an amount in which a liquid surface level H of the injected electrolytic solution is in a middle liquid surface range (Ha ≤ H < Hb) in which the liquid surface level H is equal to or higher than a first reference height Ha at which the entire electrode opposed region of the electrode body is immersed in the electrolytic solution and is lower than a second reference height Hb at which the electrolytic solution adheres to the injection port. In the second injecting step, while increasing the pressure in the battery case to a second pressure P2 (P2 > P1) higher than the first pressure P1, a second injection amount V2 (V2 = V - V1) of the remaining electrolytic solution is injected until reaching a defined amount V with the liquid surface level H of the electrolytic solution maintained in the middle liquid surface range.

### SUMMARY

Incidentally, the present inventor wish to reduce a time required for the injecting step.

A method for manufacturing a battery disclosed herein includes a preparing step of preparing a battery assembly in which an electrode body is housed in a rectangular case including an injection port, and an injecting step of injecting an electrolytic solution into the case from the injection port in a state where the battery assembly is disposed with the injection port facing up. In the injecting step, a preset amount of the electrolytic solution is injected by multiple separate steps while first processing of injecting the electrolytic solution up to a position higher than a reference height set to be equal to or higher than an upper end of the electrode body at inside of the case in a state where the battery assembly is disposed with the injection port facing up, second processing of depressing the case by reducing a pressure in the case and maintaining a liquid surface level of the electrolytic solution injected in the first processing at a position equal to or higher than the reference height, and third processing of, after the pressure in the case is reduced to a preset pressure, releasing the inside of the case are repeated.

According to the method for manufacturing a battery, a time required for the injecting step can be reduced.

### BRIEF DESCRIPTION OF THE DRAWINGS

FIG. 1 is a perspective view schematically illustrating a battery.
FIG. 2 is a cross-sectional view taken along the line A-A of FIG. 1.
FIG. 3 is a schematic view of an electrode body.
FIG. 4 is a flowchart illustrating an example of a method for manufacturing a battery.
FIG. 5 is a schematic view illustrating an example of an injecting device.
FIG. 6 is a graph illustrating temporal change of an internal pressure of a case and a liquid surface level of an electrolytic solution during an injecting step.
FIG. 7 is a cross-sectional side view of the case during second processing.
FIG. 8 is a graph illustrating temporal change of an internal pressure of a case and a liquid surface level of an electrolytic solution during an injecting step according to another embodiment.
FIG. 9 is a flowchart illustrating an example of a method for manufacturing a battery according to still another embodiment.
FIG. 10 is a flowchart illustrating an example of a method for manufacturing a battery according to yet another embodiment.

### DETAILED DESCRIPTION

An embodiment of a technology disclosed herein will be described below with reference to the accompanying drawings. As a matter of course, the embodiment described herein are not intended to be particularly limiting the present disclosure. The accompanying drawings are schematic and do not necessarily reflect actual members or portions. Members/portions that have the same effect will be denoted by the same sign as appropriate, and the overlapping description will be omitted as appropriate. Reference signs "X," Y," and "Z" in the drawings denote "a depth direction," "a width direction," and "a height direction," respectively. A Y-direction is orthogonal to an X-direction. A Z-direction is orthogonal to the X-direction and the Y-direction. However, these directions are defined for convenience of description, and do not limit an installation form of a battery 10. The notation "A to B" that indicates a numerical range means "A or more and B or less," unless specifically stated otherwise.

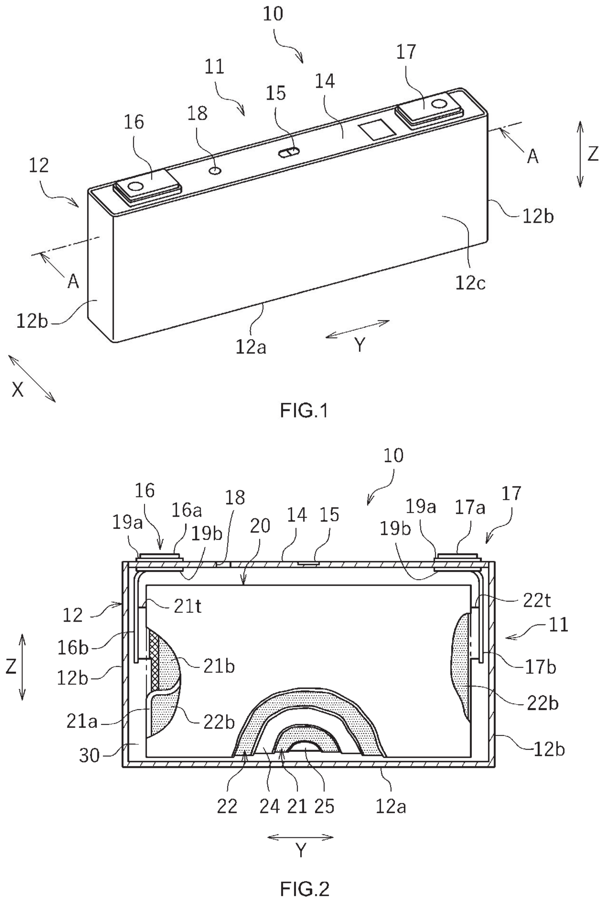

FIG. 1 is a perspective view schematically illustrating a battery 10. FIG. 2 is a cross-sectional view taken along the line A-A of FIG. 1. In FIG. 2, an electrode body 20 is illustrated in a partial cross-sectional view where the electrode body 20 is partially broken. In this specification, as the battery 10, a lithium-ion secondary battery will be described as an example. However, a type of the battery 10 is not limited to a lithium-ion secondary battery and may also be a sodium-ion secondary battery, a magnesium-ion secondary battery, a nickel hydrogen secondary battery, or the like. The battery 10 includes a rectangular case 11, the electrode body 20, and an electrolytic solution 30.

The case 11 includes a case body 12 and a sealing plate 14. The case body 12 is formed into a rectangular parallelepiped shape. The case body 12 includes a bottom wall 12a, a pair of narrow width walls 12b, and a pair of broad width walls 12c. The bottom wall 12a extends in the X-direction and the Y-direction. The pair of narrow width walls 12b are opposed to each other in the Y-direction. Each of the pair of narrow width walls 12b extends upward from a corresponding one of both end portions of the bottom wall 12a in the Y-direction. The pair of broad width walls 12c are opposed to each other in the X-direction. Each of the pair of broad width walls 12c extends upward from a corresponding one of both end portions of the bottom wall 12a in the X-direction. The pair of narrow width walls 12b and the pair of broad width walls 12c form side walls of the case body 12. An upper portion of the case body 12 is opened. The case body 12 is formed of, for example, aluminum or an aluminum alloy containing aluminum as a main material from a viewpoint of reducing a weight and ensuring a required rigidity.

The sealing plate 14 is attached to an opening of the case body 12. The sealing plate 14 closes the opening of the case body 12. The sealing plate 14 is joined to the case body 12, for example, by welding or the like. When the sealing plate 14 is joined to the case body 12, inside of the case 11 is sealed. The sealing plate 14 forms an upper surface of the case 11. The sealing plate 14 may be formed of the same material as that of the case body 12. From a viewpoint of reducing the weight and ensuring the required rigidity, the sealing plate 14 may be formed of, for example, aluminum or an aluminum alloy containing aluminum as a main material. The sealing plate 14 is provided with a gas exhaust valve 15, a positive electrode terminal 16, a negative electrode terminal 17, and an injection port 18.

The gas exhaust valve 15 is provided in a central portion of the sealing plate 14 in the Y-direction. The gas exhaust valve 15 breaks when the pressure in the case 11 is increased to reach a predetermined pressure or more. Thus, when the pressure in the case 11 reaches the predetermined pressure or more, gas in the case 11 is exhausted to outside of the case 11.

The positive electrode terminal 16 and the negative electrode terminal 17 are provided in a pair so as to be located at both end portions of the sealing plate 14 in the Y-direction. The positive electrode terminal 16 includes an external terminal 16a and an internal terminal 16b. The external terminal 16a is attached to an upper side of the sealing plate 14 via a gasket 19a. The internal terminal 16b is attached to a lower side of the sealing plate 14 via an insulator 19b. The internal terminal 16b extends in the Z-direction. The internal terminal 16b is electrically connected to the electrode body 20 in the case 11.

The negative electrode terminal 17 includes an external terminal 17a and an internal terminal 17b. The external terminal 17a is attached to the upper side of the sealing plate 14 via the gasket 19a. The internal terminal 17b is attached to the lower side of the sealing plate 14 via an insulator 19b. The internal terminal 17b extends in the Z-direction. The internal terminal 17b is electrically connected to the electrode body 20 inside the case 11.

The injection port 18 is an opening through which the electrolytic solution 30 is injected into the case 11 after the sealing plate 14 is assembled to the case body 12. The injection port 18 is formed of a through hole passing through the sealing plate 14 in the Z-direction. The injection port 18 is arranged between the gas exhaust valve 15 and the positive electrode terminal 16 in the Y-direction. Note that an arrangement of the injection port 18 is not limited to an arrangement illustrated in FIG. 1. For example, the injection port 18 may be arranged between the gas exhaust valve 15 and the negative electrode terminal 17 in the Y-direction.

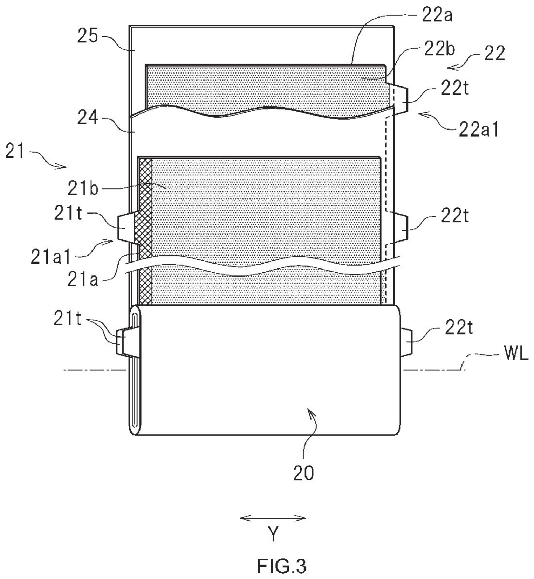

FIG. 3 is a schematic view of the electrode body 20. The electrode body 20 of this embodiment is a so-called wound electrode body. The electrode body 20 includes a positive electrode sheet 21, a negative electrode sheet 22, and sheet-like separators 24 and 25. The electrode body 20 is formed by winding the positive electrode sheet 21, the separators 24 and 25, and the negative electrode sheet 22 around a winding axis WL in the longitudinal direction in a state where the positive electrode sheet 21, the separators 24 and 25, and the negative electrode sheet 22 are stacked to form a flat shape. As illustrated in FIG. 2, the electrode body 20 is housed in the case 11. In a form illustrated in FIG. 2, the electrode body 20 is arranged in the case 11 such that the winding axis WL is substantially in parallel to the Y-direction. Note that the electrode body 20 may also be a so-called stacked electrode body that is formed by stacking multiple rectangular positive electrodes and multiple rectangular negative electrodes such that the multiple rectangular positive electrodes and the multiple rectangular negative electrodes are insulated.

As illustrated in FIG. 3, the positive electrode sheet 21 includes a foil-shaped positive electrode current collector 21a and a positive electrode active material layer 21b formed along the longitudinal direction on both surfaces of the positive electrode current collector 21a. The positive electrode active material layer 21b contains various materials, such as a positive electrode active material, a binder, a conductive material, or the like. As for materials contained in the positive electrode current collector 21a and the positive electrode active material layer 21b that form the positive electrode sheet 21, any materials that can be used in a known general lithium-ion secondary battery without particular limitation. Moreover, on one side edge of the electrode body 20 in the Y-direction of the battery 10, the positive electrode active material layer 21b is not formed at one side edge portion of the electrode body 20 in the Y-direction of the battery 10, and an unformed portion 21al where the positive electrode current collector 21a is exposed is provided. Multiple positive electrode tabs 21t are intermittently provided in preset positions along a longitudinal direction of the positive electrode sheet 21 in the unformed portion 21a1. Each of the multiple positive electrode tabs 21t protrudes in the Y-direction of the positive electrode sheet 21. In a form illustrated in FIG. 3, the multiple positive electrode tabs 21t are arranged such that positions of the multiple positive electrode tabs 21t match in a wound state. As illustrated in FIG. 2, the positive tabs 21t are electrically connected to the internal terminal 16b of the positive electrode terminal 16.

As illustrated in FIG. 3, the negative electrode sheet 22 includes a foil-shaped negative electrode current collector 22a and a negative electrode active material layer 22b formed along the longitudinal direction on one or both surfaces of the negative electrode current collector 22a. The negative electrode active material layer 22b contains various materials, such as a negative electrode active material, a binder, or the like. As for materials contained in the negative electrode current collector 22a and the negative electrode active material layer 22b that form the negative electrode sheet 22, any materials that can be used in a known general lithium-ion secondary battery without particular limitation. Moreover, the negative electrode active material layer 22b is not formed at the other side edge portion of the electrode body 20 in the Y-direction of the battery 10, and an unformed portion 22a1 where the negative electrode current collector 22a is exposed is provided. Multiple negative electrode tabs 22t are intermittently provided at preset positions along a longitudinal direction of the negative electrode sheet 22 in the unformed portion 22a1. Each of the multiple negative tabs 22t protrudes in the Y-direction of the negative electrode sheet 22. In the form illustrated in FIG. 3, the multiple negative tabs 22t are arranged such that positions of the multiple negative tabs 22t match in a wound state. As illustrated in FIG. 2, The negative tabs 22t are electrically connected to the internal terminal 17b of the negative electrode terminal 17.

Each of the separators 24 and 25 is interposed between the positive electrode sheet 21 and the negative electrode sheet 22 to prevent direct contact between the positive electrode sheet 21 and the negative electrode sheet 22. Although not illustrated in the drawings, multiple fine pores are formed in the separators 24 and 25. The fine pores are configured to allow charge carriers to move between the positive electrode sheet 21 and the negative electrode sheet 22. Note that a charge carrier is a free particle that carries charge. In a lithium-ion secondary battery, the charge carrier is lithium ion. A resin sheet having a required heat resistance is used for the separators 24 and 25. As the separators 24 and 25, any material that can be used in a known general lithium-ion secondary battery can be used without particular limitation.

As illustrated in FIG. 2, the electrolytic solution 30 is housed within the case 11 with the electrode body 20. The electrolytic solution 30 is a nonaqueous electrolytic solution that includes a nonaqueous solvent and an electrolyte salt of a preset concentration. Various substances that are conventionally used can be used for the nonaqueous solvent and the electrolyte salt. For example, a mixed solvent obtained by mixing ethylene carbonate (EC), dimethyl carbonate (DMC), and ethyl methyl carbonate (EMC) may be used as the nonaqueous solvent. For example, lithium hexafluorophosphate (LiPF₆) may be used as the electrolyte salt. Additionally, an additive may be added to the electrolytic solution 30 as necessary.

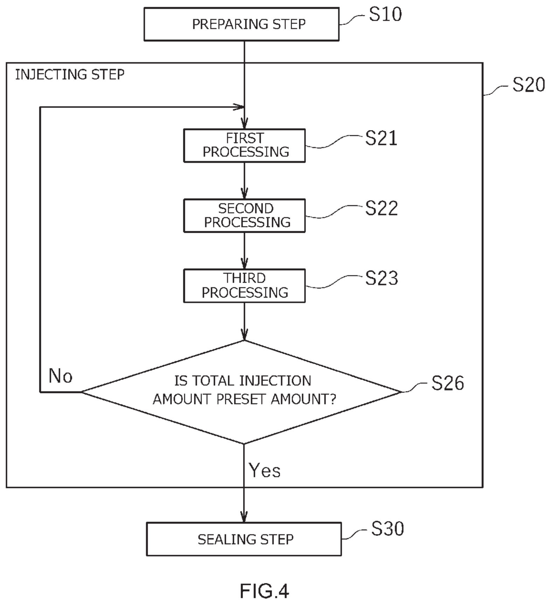

FIG. 4 is a flowchart illustrating an example of a method for manufacturing the battery 10 according to one embodiment. The manufacturing method for battery 10 includes a preparing step S10, an injecting step S20, and a sealing step S30.

In the preparing step S10, a battery assembly in which the electrode body 20 is housed in the rectangular case 11 including the injection port 18 is prepared. In this specification, the term "battery assembly" refers to a battery assembled up to a stage before the electrolytic solution 30 is injected into the case 11. In the preparing step S10, the battery assembly may be manufactured according to known procedures and a premanufactured battery assembly may be prepared. There is no particular limitation on a size of the electrode body 20 in the battery assembly prepared in the preparing step S10. For example, a width of the electrode body 20 may be 20 cm or more. A high-capacity battery 10 can be achieved by using the relatively large electrode body 20.

The injecting step S20 is a step of injecting the electrolytic solution 30 into the battery assembly prepared in the preparing step S10. In the injecting step S20, the electrolytic solution 30 is injected into the case 11 through the injection port 18 in a state where the battery assembly is placed with the injection port 18 facing up. In the injecting step S20, the electrolytic solution 30 is injected into the case 11 using an injecting device 50. The injecting step S20 includes first processing S21, second processing S22, and third processing S23.

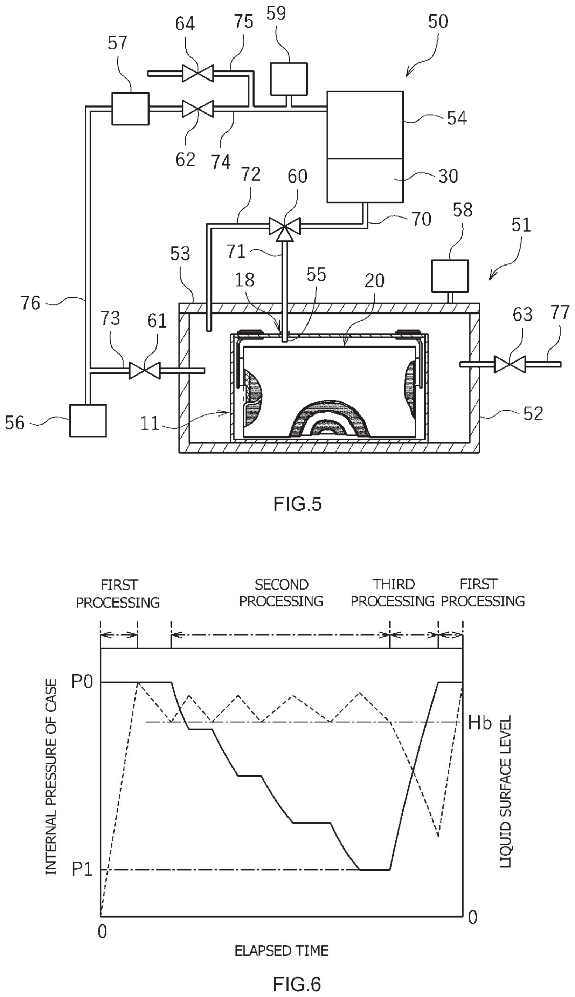

FIG. 5 is a schematic view illustrating an example of the injecting device 50. The injecting device 50 includes a housing chamber 51, an electrolytic solution tank 54, an injecting nozzle 55, a vacuum pump 56, a vacuum regulator 57, pressure sensors 58 and 59, a three-way valve 60, vacuum valves 61 and 62, release valves 63 and 64, and pipes 70 to 77. Note that an operation of the injecting device 50 may be manually performed and may be automatically performed. When the operation is automatically performed, the injecting device 50 may include a control device that controls operations of the vacuum pump 56, the vacuum regulator 57, the three-way valve 60, the vacuum valves 61 and 62, the release valves 63 and 64, or the like.

The pipe 70 connects the electrolytic solution tank 54 and the three-way valve 60. The pipe 71 connects the three-way valve 60 and the injecting nozzle 55. The pipe 71 is provided so as to pass through the housing chamber 51. The pipe 72 is connected to the three-way valve 60. The pipe 72 is provided so as to pass through the housing chamber 51. The pipe 73 is connected to the housing chamber 51. The pipe 73 is provided so as to pass through the housing chamber 51. The pipe 74 connects the electrolytic solution tank 54 and the vacuum regulator 57. The pipe 75 is provided so as to branch off from the pipe 74. The pipe 76 connects the vacuum pump 56 and the vacuum regulator 57. Furthermore, the pipe 76 is connected to the pipe 73. The pipe 77 is connected to the housing chamber 51. The pipe 77 is provided so as to pass through the housing chamber 51.

The housing chamber 51 is configured to house the battery assembly. The housing chamber 51 includes a chamber body 52 and a lid 53. The chamber body 52 is formed into a rectangular parallelepiped shape and an upper portion thereof is opened. The lid 53 is configured to open and close the opening of the chamber body 52. When the chamber body 52 is closed by the lid 53, inside of the housing chamber 51 is sealed.

The electrolytic solution 30 is stored in the electrolytic solution tank 54. The electrolytic solution tank 54 is connected to the injecting nozzle 55 via the pipes 70 and 71. The injecting nozzle 55 is configured to be insertable into the injection port 18 of the battery 10. There is no particular limitation on a shape of the injecting nozzle 55 or the like. In a state where the injecting nozzle 55 inserted into the injection port 18, the electrolytic solution 30 flows into the injecting nozzle 55 from the electrolytic solution tank 54 through the pipes 70 and 71, and thus, the electrolytic solution 30 is injected into the inside of the case 11

The vacuum pump 56 is connected to the inside of the housing chamber 51 via the pipes 73 and 76. Air in the housing chamber 51 is sucked into the vacuum pump 56 through the pipes 73 and 76 by operating the vacuum pump 56. Thus, a pressure in the housing chamber 51 is reduced. Moreover, the vacuum pump 56 is connected to inside of the electrolytic solution tank 54 via the pipes 74 and 76. Air in the electrolytic solution tank 54 is sucked into the vacuum pump 56 through the pipes 74 and 76 by operating the vacuum pump 56. Thus, a pressure in the electrolytic solution tank 54 is reduced.

The vacuum regulator 57 is provided between the electrolytic solution tank 54 and the vacuum pump 56. The vacuum regulator 57 is a device used for adjusting the pressure in the electrolytic solution tank 54 by regulating an amount of air sucked into the vacuum pump 56 when the vacuum pump 56 is operated.

The pressure sensor 58 is attached to the housing chamber 51. The pressure sensor 58 is a sensor that measures the pressure in the housing chamber 51. The pressure sensor 59 is attached to the pipe 74. The pressure sensor 59 is a sensor that measures the pressure in the electrolytic solution tank 54.

The three-way valve 60 is connected to the pipes 70 to 72. When the three-way valve 60 is operated, a path of a fluid flowing through the pipes 70 to 72 is changed. The three-way valve 60 can change the path through which the fluid flows to either a path through which the fluid flows through the pipes 70 and 71 or a path through which the fluid flows through the pipes 71 and 72. When the path through which the fluid flows through the pipes 70 and 71 is selected, the electrolytic solution 30 can be injected from electrolytic solution tank 54 into the case 11. When the path through which the fluid flows through the pipes 71 and 72 is selected, air can be caused to flow between the case 11 and the housing chamber 51.

The vacuum valve 61 is provided on the pipe 73. The vacuum valve 61 is positioned between the housing chamber 51 and the vacuum pump 56. The vacuum valve 62 is provided on the pipe 74. The vacuum valve 62 is arranged between the electrolytic solution tank 54 and the vacuum pump 56.

The release valve 63 is provided on the pipe 77. When the release valve 63 is opened, the inside of the housing chamber 51 is released to the atmosphere. The release valve 64 is provided on the pipe 75. When the release valve 64 is opened in a state where the vacuum valve 62 is closed, the inside of the electrolytic solution tank 54 is released to the atmosphere.

FIG. 6 is a graph illustrating temporal change of an internal pressure of the case 11 and a liquid surface level of the electrolytic solution 30 during the injecting step S20. A solid line in the graph of FIG. 6 represents the temporal change of the pressure in the case 11. A dashed line in the graph of FIG. 6 represents the temporal change of the liquid surface level of the electrolytic solution 30 in the case 11. A reference sign P0 in the graph of FIG. 6 represents an atmospheric pressure. A reference sign P1 represents a reference pressure. The reference pressure P1 is a preset pressure and is lower than the atmospheric pressure P0. A reference sign Hb represents a reference height. The reference height Hb is a preset height and is set to a height equal to or higher than an upper end of the electrode body 20. In this embodiment, the reference height Hb is set to a height equal to the upper end of the electrode body 20. In the graph of FIG. 6, an elapsed time is a time that has elapsed since a start of the injecting step S20. Note that, in the graph of FIG. 6, the internal pressure of the case 11 and the liquid surface level of the electrolytic solution 30 in the case 11 from the start of the injecting step S20 to the second first processing S21. In the graph in FIG. 6, illustration of the internal pressure of the case 11 and the liquid surface level of the electrolytic solution 30 in the case 11 during and after the second second processing S22 is omitted.

In the first processing S21, the battery assembly is placed in the housing chamber 51 with the injection port 18 facing up. Next, the three-way valve 60 is operated to allow the fluid to flow through the pipes 70 and 71. Thus, the electrolytic solution 30 is injected into the case 11 through the injection port 18 in a state where the battery assembly is placed with the injection port 18 facing up. In the first processing step S21, the electrolytic solution 30 is injected such that the liquid surface level of the electrolytic solution 30 in the case 11 is higher than the preset reference height Hb.

When the electrolytic solution 30 is injected into the case 11, the electrolytic solution 30 is permeated in the electrode body 20. With the electrolytic solution 30 permeated in the electrode body 20, the liquid surface level of the electrolytic solution 30 in the case 11 drops. In a form illustrated in FIG. 6, when the electrolytic solution 30 is permeated in the electrode body 20 and the liquid surface level of the electrolytic solution 30 reaches the reference height Hb, the second processing S22 is performed. Note that the liquid surface level of the electrolytic solution 30 may be measured using a liquid surface sensor. The liquid surface sensor may be configured to, for example, measure the liquid surface level by irradiating the case 11 with an X-ray. Moreover, the liquid surface level of the electrolytic solution 30 may be measured based on a time from injection of the electrolytic solution 30 into the case 11. When the liquid surface level is measured based on the time from injection of the electrolytic solution 30 into the case 11, it is preferable to understand a relationship between the time from the injection of the electrolytic solution 30 in the case 11 and the liquid surface level by an experiment or the like.

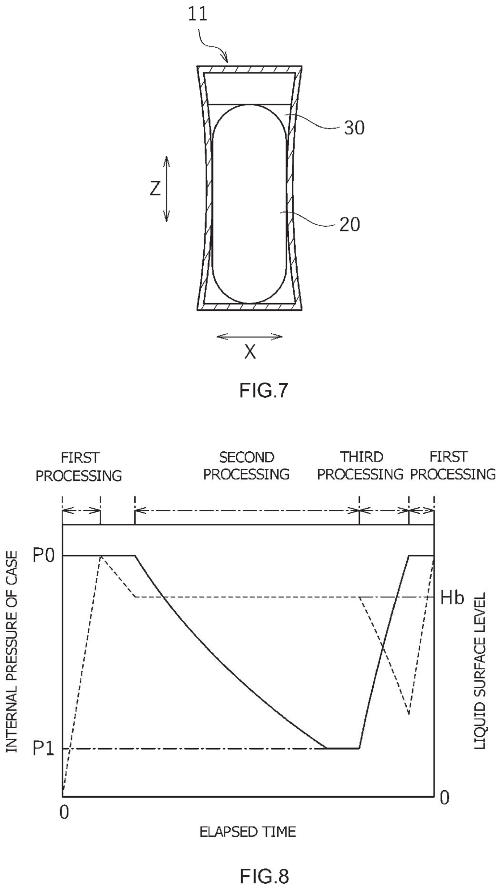

FIG. 7 is a cross-sectional side view schematically illustrating the case 11 during the second processing S22. In second processing S22, in a state where the vacuum valve 61 is closed, the vacuum valve 62 is opened, the vacuum pump 56 is operated, and the electrolytic solution tank 54 is depressurized. Furthermore, during the second processing S22, the three-way valve 60 is operated to achieve a state where the fluid can flow through the pipes 70 and 71. Thus, air flows from the inside of the case 11 to the electrolytic solution tank 54 through the pipes 70 and 71, therefore, the internal pressure of the case 11 can be reduced simultaneously with reduction of the pressure in the electrolytic solution tank 54. When the internal pressure in the case 11 is reduced, a pressure difference arises between the internal pressure of the case 11 and an external pressure outside the case 11. Due to this pressure difference, the case 11 is depressed, as illustrated in FIG. 7. When the case 11 is depressed, the liquid surface level of the electrolytic solution 30 injected into the case 11 rises.

On the other hand, the electrolytic solution 30 is injected into the case 11 is permeated in the electrode body 20. When the electrolytic solution 30 is permeated in the electrode body 20, the liquid surface level of the electrolytic solution 30 drops. In the second processing S22, the liquid surface level of the electrolytic solution 30 is maintained at a position equal to or higher than the reference height Hb by reducing the internal pressure of the case 11 in accordance with drop of the liquid surface level due to permeation of the electrolytic solution 30 in the electrode body 20 to raise the liquid surface level. That is, in the second processing S22, the case 11 is depressed by reducing the pressure in the case 11, and thus, the liquid surface level of the electrolytic solution 30 injected in the first processing S21 is maintained at a position equal to or higher than the reference height Hb.

In the form illustrated in FIG. 6, the pressure in the case 11 is intermittently reduced to maintain the liquid surface level of the electrolytic solution 30 at a position equal to or higher than the reference height Hb. In the second processing S22, the internal pressure of the case 11 is reduced such that the electrolytic solution 30 does not frow out from the case 11. In the form illustrated in FIG. 6, the internal pressure of the case 11 is reduced by four separate steps. In the form illustrated in FIG. 6, when the liquid surface level of the electrolytic solution 30 reaches the reference height Hb, pressure reduction is performed. However, the internal pressure of the case 11 may be reduced by two or three separate steps, and may be reduced by five or more separate steps. The number of separate steps by which pressure reduction is performed can be changed, as appropriate, in accordance with dimensions of the case 11, a pressure reduction amount of each step, or the like. The pressure reduction amount of each step may be the same for all steps and may be different between steps.

The second processing S22 is performed until the internal pressure of the case 11 falls to the preset reference pressure P1 or lower. When the internal pressure of the case 11 falls to the reference pressure P1 or lower and the liquid surface level of the electrolytic solution 30 drops to the reference height Hb or lower, the third processing S23 is performed. During the second processing S22, the internal pressures of the electrolytic solution tank 54 and the case 11 are measured by the pressure sensor 59. Therefore, in this embodiment, whether the process is to proceed to the third processing S23 is determined based on whether a measurement result of the pressure sensor 59 is the reference pressure P1 or lower. In this embodiment, the preset reference pressure P1 is approximately -0.09 MPa to -0.05 MPa in terms of gauge pressure. Note that the preset reference pressure P1 is not limited thereto and may be also approximately -0.05 MPa to -0.02 MPa in terms of gauge pressure.

In the third processing S23, the inside of the case 11 is released. In this embodiment, the inside of the case 11 is released to the atmosphere by closing the vacuum valve 62 and opening the release valve 64. Thus, the internal pressure of the case 11 is caused to be equal to the atmospheric pressure P0 and the depression of the case 11 is eliminated. As the depression of the case 11 is eliminated, the liquid surface level of the electrolytic solution 30 drops.

Processing from the first processing S21 to the third processing S23 is repeated until a preset amount of the electrolytic solution 30 is injected. When a total amount of electrolytic solution 30 injected into the case 11 is less than the preset amount (NO in S26), the processing from the first processing S21 to the third processing S23 is performed again after the third processing S23 ends. When the total amount of the electrolytic solution 30 injected into the case 11 is equal to or larger than the preset amount (YES in S26), the injecting step S20 ends upon completion of the third processing S23. Therefore, in the injecting step S20, while the processing from the first processing S21 to the third processing S23 is repeated, the preset amount of the electrolytic solution 30 is injected by multiple separate steps.

When the injecting step S20 ends, the sealing step S30 is performed. In the sealing step S30, the injection port 18 is sealed. There is no particular limitation on a method for sealing the injection port 18 and various conventionally known methods may be used. For example, the injection port 18 may be sealed by attaching a metal plug to the injection port 18 and performing laser welding or the like.

As illustrated in FIG. 4, the method for manufacturing the battery 10 includes the preparing step S10 and the injecting step S20. The injecting step S20 includes the first processing S21, the second processing S22, and the third processing S23. In the first processing S21, with the battery assembly placed with the injection port 18 facing up, the electrolytic solution 30 is until reaching a position higher than the reference height Hb set at a position equal to a higher than the upper end of the electrode body 20 in the case 11. In the second processing S22, while the case 11 is depressed by reducing the internal pressure of the case 11, the liquid surface level of the electrolytic solution 30 injected in the first processing S21 is maintained at a position equal to or higher than the reference height Hb. After the internal pressure of the case 11 is reduced to the preset reference pressure P1, the third processing S23 is performed. In the third processing S23, the inside of the case 11 is released. According to the manufacturing method described above, the pressure in the case 11 is reduced to depress the case 11, and thus, air in the electrode body 20 is exhausted. Therefore, the electrolytic solution 30 can be easily permeated in the electrode body 20. Thus, a time required for the injecting step S20 can be reduced.

In this embodiment, as illustrated in FIG. 6, in the second processing S22, the liquid surface level of the electrolytic solution 30 is maintained at a position equal to or higher than the reference height Hb by intermittently reducing the internal pressure of the case 11. Thus, the liquid surface level of the electrolytic solution 30 can be maintained at a position equal to or higher than the reference height Hb by a relatively simple method.

According to this embodiment, when the electrolytic solution 30 is permeated in the electrode body 20 and the liquid surface level of the electrolytic solution 30 reaches the reference height Hb, the second processing S22 is performed. Thus, the entire electrode body 20 is immersed in the electrolytic solution 30 from completion of the first processing S21 until the second processing S22 ends. Therefore, the time required for the injecting step S20 can be further reduced.

According to this embodiment, in the third processing S23, the inside of the case 11 is released to the atmosphere. There is no need for precise pressure management in the third processing S23.

Incidentally, there is a probability that, when the internal pressure of the case 11 is largely reduced, plastic deformation of the case 11 and volatilization of the electrolytic solution 30 are caused. According to this embodiment, however, the preset pressure is -0.09 MPa to -0.05 MPa in terms of gauge pressure. Thus, it is possible to prevent plastic deformation of the case 11 and volatilization of the electrolytic solution 30.

Moreover, in a relatively large electrode body 20 having a width of 20 cm or more, it takes time for the electrolytic solution 30 to be permeated in the entire electrode body 20. However, using the manufacturing method of this embodiment, the time required for the injecting step S20 can be shortened. Therefore, the manufacturing method of this embodiment can be particularly effectively used in manufacturing a relatively large battery10 including the relatively large electrode body 20 having a width of 20 cm or more.

One embodiment of the technology proposed herein has been described above. However, the embodiment described above is merely an example, and the technology of the present disclosure can be implemented in various other embodiments.

FIG. 8 is a graph illustrating temporal change of the internal pressure of the case 11 and the liquid surface level of the electrolytic solution 30 during the injecting step S20. As illustrated in FIG. 8, in the second processing S22, the liquid surface level of the electrolytic solution 30 may be maintained at a position equal to or higher than the reference height Hb by continuously reducing the pressure in the case 11. The liquid surface level of the electrolytic solution 30 can be precisely controlled by performing the second processing S22 in the manner described above.

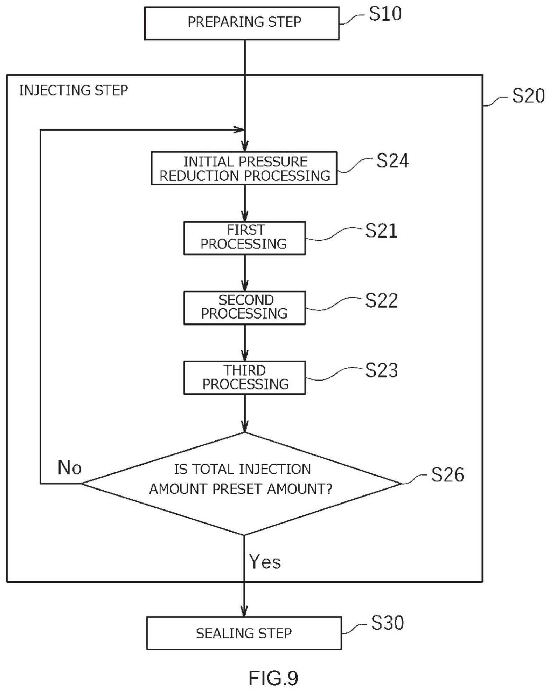

FIG. 9 is a flowchart illustrating a method for manufacturing the battery 10 according to still another embodiment. As illustrated in FIG. 9, the injecting step S20 may include initial pressure reduction processing S24. The initial pressure reduction processing S24 may be performed before the first processing S21. In the initial pressure reduction processing S24, a pressure in the housing chamber 51, the pressure in the case 11, and the pressure in the electrolytic solution tank 54 may be reduced. In the initial pressure reduction processing S24, the three-way valve 60 may be operated to cause the fluid to flow through the pipes 71 and 72, and the vacuum valve 61 may be opened to operate the vacuum pump 56. Thus, air in the case 11 flows into the housing chamber 51 through the pipes 71 and 72 and air in the housing chamber 51 to be sucked into the vacuum pump 56. Therefore, the case 11 and the housing chamber 51 can be depressurized at the same time. In the initial pressure reduction processing S24, the vacuum pump 56 may be operated with the vacuum valve 62 opened. Thus, the air in the electrolytic solution tank 54 is sucked into the vacuum pump 56 through the pipes 74 and 76. Therefore, the pressure in the electrolytic solution tank 54 is reduced. Exhaustion of air from the inside of the electrode body 20 is further promoted by performing the initial pressure reduction processing S24, and therefore, the time required for the injecting step S20 can be further reduced.

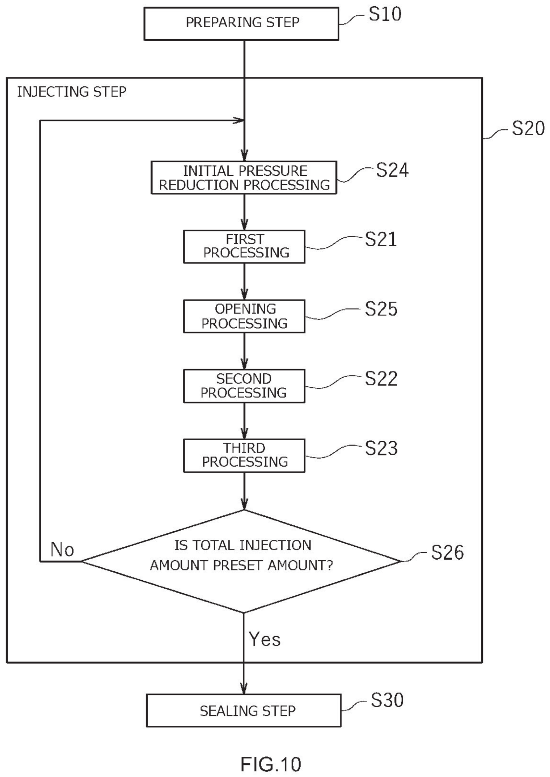

FIG. 10 is a flowchart illustrating a method for manufacturing the battery 10 according to yet another embodiment. As illustrated in FIG. 10, the method for manufacturing the battery 10 may include the initial pressure reduction processing S24 and opening processing S25. The initial pressure reduction processing S24 in the embodiment illustrated in FIG. 10 may be performed in accordance with the same steps as those in the embodiment illustrated in FIG. 9. In the opening processing S25, the inside of the housing chamber 5, the inside of the case 11, and the inside of the electrolytic solution tank 54 may be released to the atmosphere. In the opening processing S25, the three-way valve 60 may be operated to cause the fluid to flow through the pipes 71 and 72 and the release valve 63 may be opened with the vacuum valve 61 closed. Thus, air flows from outside of the housing chamber 51 to the inside thereof and the inside of the housing chamber 51 is released to the atmosphere. Furthermore, air in the housing chamber 51 flows into the case 11 through the pipes 71 and 72 and the inside of the case 11 is also released to the atmosphere. In the opening processing S25, the release valve 64 may be also opened with the vacuum valve 62 closed. Thus, air outside the electrolytic solution tank 54 flows into the electrolytic solution tank 54 through the pipes 74 and 75and thus the inside of the electrolytic solution tank 54 is released to the atmosphere.

In the opening processing S25, a liquid surface of the electrolytic solution 30 is pushed from above by air that has flowed from the housing chamber 51 to the inside of the case 11, and therefore, permeation of the electrolytic solution 30 in the electrode body 20 can be promoted. Moreover, when, after performing the initial pressure reduction processing S24, the second processing S22 is performed without performing the opening processing S25, the second processing S22 is started in a state where the pressure in the housing chamber 51 has been already reduced from the atmospheric pressure. Therefore, in the second processing S22, in depressing the case 11, it is necessary to reduce an absolute pressure in the case 11 to a relatively large extent. However, in the embodiment illustrated in FIG. 10, the second processing S22 can be started in a state where the pressure in the case 11 is at the atmospheric pressure. Thus, there is no need to largely reduce the absolute pressure in the case 11 and volatilization of the electrolytic solution 30 can be prevented.

A test example in which the manufacturing method disclosed herein was performed will be described below. However, it is not intended to limit the present disclosure to the test example described below.

In the test example, a battery assembly in which an electrode body was housed in an aluminum rectangular case was prepared. Dimensions of the case were 103 mm in height, 40 mm in depth, and 308 mm in width and each of respective thicknesses of a bottom wall and side walls of the case was 0.8 mm. As the electrode body, a wound electrode body with a height of 90 mm was prepared.

In the test example, an electrolytic solution below was prepared. A solvent for the electrolytic solution was a mixed solvent obtained by mixing EC, DMC, and EMC. A volume ratio of EC:DMC:EMC was set to 3:3:4. Lithium hexafluorophosphate was used as an electrolyte salt in the electrolytic solution. A concentration of lithium hexafluorophosphate was set to 1.15 mol/L.

In the test example, as the first processing, the electrolytic solution was injected into the case under the atmospheric pressure such that a liquid surface level was 100 mm. Thereafter, the electrolytic solution was permeated in the electrode body until the liquid surface level reached 90 mm. Next, as the second processing, an internal pressure of the case was reduced to depress the case such that the liquid surface level was maintained at 90 mm or higher. In the test example, the internal pressure of the case was reduced by 18 separate steps. A pressure reduction amount per step was set to 0.005 MPa in the test example. That is, the second processing was performed until the internal pressure of the case reached -0.09 MPa in terms of gauge pressure in the test example. When the internal pressure of the case reached -0.09 MPa in terms of gauge pressure, the third processing was performed. In the test example, as the third processing, the inside of the case was released to the atmosphere. In the test example, processing from the first processing to the third processing were repeated four times to cause a total amount of the injected electrolytic solution to be a preset amount. Note that, in fourth first processing, the electrolytic solution was injected until the liquid surface level reached approximately 96 mm such that the total amount of the injected electrolytic solution was caused to be the preset amount.

In a comparative example, a same battery assembly as that of the test example was prepared. In the comparative example, a same electrolytic solution as that of the test example was prepared. In the comparative example, the electrolytic solution was initially injected into the case such that a liquid surface level was 100 mm. Thereafter, without reducing a pressure in the case, the electrolytic solution was permeated in the electrode assembly until the liquid surface level reached 0 mm. When the liquid surface level reached 0 mm, the electrolytic solution was injected again. In second injection, the electrolytic solution was injected such that a total amount of the injected electrolytic solution was a preset amount.

As described above, the test example and the comparative example were conducted, and an elapsed time from a start of the first processing to completion of permeation was measured. In each of the test example and the comparative example, it was determined that permeation was completed when the liquid surface level reached 0 mm after a preset amount of the electrolytic solution had been all injected into the case. The elapsed time to completion of permeation in the test example was 18.5 hours. The elapsed time to completion of permeation in the comparative example was 43 hours. Based on results described above, it was found that, when the method of the test example was used, a permeation time could be reduced, as compared to the comparative example.

The technology disclosed herein has been described above in various forms. However, the embodiments described above or the like shall not limit the present disclosure, unless specifically stated otherwise. Various changes can be made to the technology disclosed herein, and each of components and processes described herein can be omitted as appropriate or can be combined with another one or other ones of the components and the processes as appropriate, unless a particular problem occurs. The present specification includes disclosure set forth in the following items.

First Item: A method for manufacturing a battery, the method including a preparing step of preparing a battery assembly in which an electrode body is housed in a rectangular case including an injection port, and an injecting step of injecting an electrolytic solution into the case from the injection port in a state where the battery assembly is disposed with the injection port facing up, and in which in the injecting step, a preset amount of the electrolytic solution is divided and injected a plurality of times while first processing of injecting the electrolytic solution up to a position higher than a reference height set to be equal to or higher than an upper end of the electrode body at inside of the case in a state where the battery assembly is disposed with the injection port facing up, second processing of depressing the case by reducing a pressure in the case and maintaining a liquid surface level of the electrolytic solution injected in the first processing at a position equal to or higher than the reference height, and third processing of, after the pressure in the case is reduced to a preset pressure, releasing the inside of the case are repeated.

Second Item: The method for manufacturing a battery according to the first item, in which in the second processing, the pressure in the case is intermittently reduced to maintain the liquid surface level of the electrolytic solution at the position equal to or higher than the reference height.

Third Item: The method for manufacturing a battery according to the first item, in which in the second processing, the pressure in the case is continuously reduced to maintain the liquid surface level of the electrolytic solution at the position equal to or higher than the reference height.

Fourth Item: The method for manufacturing a battery according to any one of the first to third items, in which after the first processing, when the electrolytic solution is permeated in the electrode body and the liquid surface level of the electrolytic solution reaches the reference height, the second processing is performed.

Fifth Item: The method for manufacturing a battery according to any one of the first to fourth items, in which in the third processing, the inside of the case is released to an atmosphere.

Sixth Item: The method for manufacturing a battery according to any one of the first to fifth items, in which the preset pressure is -0.09 MPa to -0.05 MPa in terms of gauge pressure.

Seventh Item: The method for manufacturing a battery according to any one of the first to sixth items, in which a width of the electrode body is 20 cm or more.

## Claims

1. A method for manufacturing a battery (10), the method comprising:
a preparing step (S10) of preparing a battery assembly in which an electrode body (20) is housed in a rectangular case (11) including an injection port (18); and
an injecting step (S20) of injecting an electrolytic solution (30) into the case (11) from the injection port (18) in a state where the battery assembly is disposed with the injection port (18) facing up, wherein
in the injecting step (S20), a preset amount of the electrolytic solution (30) is divided and injected a plurality of times while
first processing (S21) of injecting the electrolytic solution (30) up to a position higher than a reference height (Hb) set to be equal to or higher than an upper end of the electrode body (20) at inside of the case (11) in a state where the battery assembly is disposed with the injection port (18) facing up,
second processing (S22) of depressing the case (11) by reducing a pressure in the case (11) and maintaining a liquid surface level of the electrolytic solution (30) injected in the first processing (S21) at a position equal to or higher than the reference height (Hb), and
third processing (S23) of, after the pressure in the case (11) is reduced to a preset pressure (P1), releasing the inside of the case (11)
are repeated.

2. The method for manufacturing a battery (10) according to claim 1, wherein in the second processing (S22),
the pressure in the case (11) is intermittently reduced to maintain the liquid surface level of the electrolytic solution (30) at the position equal to or higher than the reference height (Hb).

3. The method for manufacturing a battery (10) according to claim 1, wherein in the second processing (S22),
the pressure in the case (11) is continuously reduced to maintain the liquid surface level of the electrolytic solution (30) at the position equal to or higher than the reference height (Hb).

4. The method for manufacturing a battery (10) according to any one of claims 1 to 3, wherein
after the first processing (S21), when the electrolytic solution (30) is permeated in the electrode body (20) and the liquid surface level of the electrolytic solution (30) reaches the reference height (Hb), the second processing (S22) is performed.

5. The method for manufacturing a battery (10) according to any one of claims 1 to 4, wherein
in the third processing (S23), the inside of the case (11) is released to an atmosphere.

6. The method for manufacturing a battery (10) according to any one of claims 1 to 5, wherein
the preset pressure is -0.09 MPa to -0.05 MPa in terms of gauge pressure.

7. The method for manufacturing a battery (10) according to any one of claims 1 to 6, wherein
a width of the electrode body (20) is 20 cm or more.
